(19) Europäisches Patentamt
European Patent Office
Office européen des brevets

(11) **EP 1 264 222 B1**

(12) **EUROPÄISCHE PATENTSCHRIFT**

(45) Veröffentlichungstag und Bekanntmachung des Hinweises auf die Patenterteilung:
**07.01.2004   Patentblatt 2004/02**

(51) Int Cl.7: **G05B 13/04**

(86) Internationale Anmeldenummer:
**PCT/EP2001/001454**

(21) Anmeldenummer: **01921278.6**

(22) Anmeldetag: **09.02.2001**

(87) Internationale Veröffentlichungsnummer:
**WO 2001/059531 (16.08.2001 Gazette 2001/33)**

(54) **VERFAHREN UND VORRICHTUNG ZUM VERSTELLEN EINES ELEMENTS**

METHOD AND DEVICE FOR ADJUSTING AN ELEMENT

PROCEDE ET DISPOSITIF POUR DEPLACER UN ELEMENT

(84) Benannte Vertragsstaaten:
**DE FR GB IT**

(30) Priorität: **09.02.2000   DE 10005611**

(43) Veröffentlichungstag der Anmeldung:
**11.12.2002   Patentblatt 2002/50**

(73) Patentinhaber: **Hoche, Randolf**
**80637 München (DE)**

(72) Erfinder: **Hoche, Randolf**
**80637 München (DE)**

(74) Vertreter: **Schwan - Schwan - Schorer**
**Bauerstrasse 22**
**80796 München (DE)**

(56) Entgegenhaltungen:
**DE-A- 4 344 283        US-A- 5 424 942**
**US-A- 5 450 202        US-A- 5 519 605**

**Beschreibung**

Die vorliegende Erfindung betrifft ein Verfahren und eine Vorrichtung zum Verstellen eines Elements, insbesondere eines Drehspiegels, mittels eines Galvanometer-Aktors gemäß eines vorgebbaren Soll-Positionsverlaufs für das zu verstellende Element, wobei eine Steuereinheit das Stellsignal für den Galvanometer-Aktor liefert.

Üblicherweise ist dabei die Steuereinheit als PID-Regler ausgebildet, welche aus dem Positionssignal eines die Position des zu verstellenden Elements erfassenden Positionssensors das Stellsignal ermittelt, wobei die Abweichung zwischen momentaner Sollposition und momentaner gemessener Position, das Integral über diese Abweichung sowie deren zeitliche Ableitung als Eingangsgrößen des Reglers verwendet werden. Nachteilig bei einer solchen Regelung ist die oft unzureichende Genauigkeit, mit der schnelle Änderungen im Sollsignal umgesetzt werden.

Aus US 5 450 202 ist ein System zum Verstellen eines Spiegels mittels eines Galvanometer-Aktors bekannt, welches in Resonanz betrieben wird und bei welchem eine Steuereinheit vorgesehen ist, die den Strom des Aktors so steuert, daß der Spiegel zu bestimmten Steuerzeitpunkten, die um die halbe Resonanzperiode auseinanderliegen, jeweils möglichst genau eine vorbestimmte Position einnimmt. Die zeitliche Abfolge dieser Soll-Positionen wiederholt sich zyklisch, d.h. sie ist bei jedem Durchlauf dieselbe. Der Strom wird zwischen zwei benachbarten Steuerzeitpunkten jeweils auf einem spezifischen konstanten Wert gehalten, der von der Steuereinheit berechnet wird. Der Berechnungsalgorithmus ist adaptiv ausgebildet, indem für jede Soll-Position bei jedem Durchlauf mittels eines Positionssensors die Abweichung zwischen der erreichten Ist-Position und der vorgegebenen Soll-Position ermittelt wird und diese Abweichung bei der Berechnung des Stromwerts für diese Soll-Position bei dem nächsten Durchlauf verwendet wird, um die Berechnung des Stromwerts zu korrigieren, und die Abweichung zu minimieren. Diese Korrektur erfolgt anhand eines Parameters, der von einem Modell abgeleitet wird, bei welchem der Spiegel und der Aktor als gedämpfter harmonischer Oszillator betrachtet werden. Eine Anpassung des Modells erfolgt nicht. Nachteilig bei diesem System ist, daß die verwendete Steuerstrategie nur für resonant betriebene Systeme, bei welchen ein bestimmter Soll-Positionsverlauf zyklisch wiederholt wird, anwendbar ist. Dabei ist einerseits ein Steuern der Position nur zu bestimmten, von der Resonanzperiode vorgegebenen Zeitpunkten möglich, und andererseits liefert das System für einen nur einmal durchlaufenen Soll-Positionsverlauf keine ausreichend genaue Steuerung.

Aus der JP-A-10023777 ist ein System zum Verstellen eines Spiegels bekannt, dessen Steuereinheit zur Ermittlung der Stellsignale ein Bewegungsmodell des Spiegelaktors verwendet, wobei Filter für die Winkelbeschleunigung und den Motorstrom verwendet werden.

Aus der DE-A-43 44 283 ist eine Regelung für einen Elektromotor bekannt, welche ein Modell mit einer Parameter-Lerneinrichtung verwendet.

Aus der US-A-5 233 512 ist eine Regelung für einen Elektromotor bekannt, bei welchem ein Modell des Elektromotors zur Fehlerüberwachung der Regelung verwendet wird.

Aus der US-A-5 519 605 ist eine Regelung mit einem Prozessmodell bekannt, welches auf einer Stepresponse bzw. Impulsresponse basiert.

Es ist Aufgabe der vorliegenden Erfindung, ein Verfahren und eine Vorrichtung zum Verstellen eines Elements zu schaffen, welches bzw. welche das möglichst genaue Abfahren eines frei vorgebbaren zeitlichen Soll-Positionsverlaufs des zu verstellenden Elements bei möglichst geringem Rechenaufwand ermöglichen und für hohe dynamische Anforderungen geeignet sind.

Diese Aufgabe wird erfindungsgemäß gelöst durch ein Verfahren gemäß Anspruch 1 bzw. eine entsprechende Vorrichtung gemäß Anspruch 10. Bei dieser erfindungsgemäßen Lösung ist vorteilhaft, daß durch das gewählte Modell, die gewählte Regelstrategie und das Vorsehen eines Vorfilters zur Überprüfung und ggfs. Optimierung des Sollpositionsverlaufs eine im Rahmen der Systemmöglichkeiten genaue Realisierung eines vorgegebenen Soll-Pasitionsverlaufs, bei vergleichsweise geringem Rechenaufwand ermöglicht wird, wodurch auch hohe dynamische Anforderungen gemeistert werden können.

Bevorzugte Ausgestaltungen der Erfindung ergeben sich aus den Unteransprüchen.

Vorzugsweise sind die bei dem Modell verwendeten Parameter durch den Vergleich der Modellvorhersage und dem Positionssignal zwecks Optimierung der Modellvorhersage veränderbar. In bevorzugter Ausgestaltung der Erfindung wird ein lineares Modell gewählt und die bei dem Modell verwendeten Parameter werden nachgeführt, um Nichtlinearitäten der Einheit aus dem Aktor und dem Element zu erfassen. Optional wird der im Galvanometer fließende Strom gemessen und als bei der Ermittlung des Stellsignals zu berücksichtigende Eingangsgröße der Steuereinheit zugeführt. Die Steuereinheit kann einen Integrator aufweisen, der Abweichungen zwischen der Soll-Stellfunktion und dem Positionssignal integriert und dessen Ausgangssigal bei der Ermittlung der Stellgröße berücksichtigt wird. Vorzugsweise handelt es sich bei dem Element um einen drehbaren Spiegel eines optischen Systems, wobei der Galvanometer-Aktor, bei des sich um einen Linearmotor handeln kann, mit fester Spule und drehbarem Magneten oder festem Magneten und drehbarer Spule ausgebildet ist. Der Galvanometer-Aktor kann den Antrieb eines Kopfpositionierungssystems für Festplatten bilden, wobei die Positionsinformation auf den Platten kodiert ist, woraus das Positionssignal erzeugt wird. Bei dem Stellsignal handelt es sich vorzugsweise um die Spannung, mit welcher der Galvanometer-Aktor beaufschlagt wird.

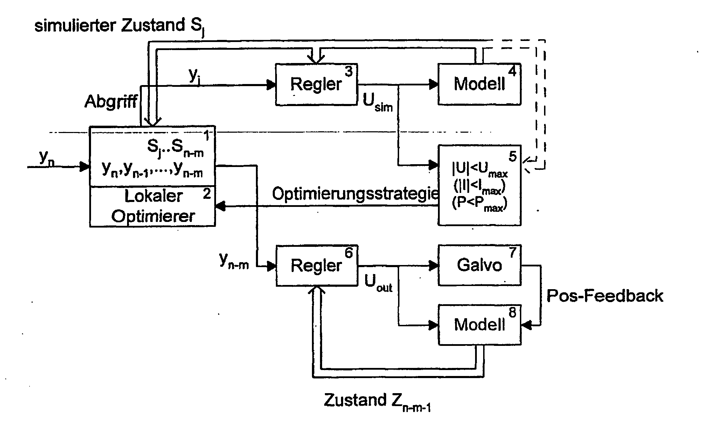

Die einzige Figur zeigt ein Blockschaltbild einer Ausführungsform einer erfindungsgemäßen Steuereinheit.

Als "Galvanometer-Aktor" ist vorliegend jede elektromechanische Einrichtung zu verstehen, die von einem Stromfluß erzeugte magnetische Felder benutzt, um ein bewegliches Element sowohl zyklisch als auch zufällig zu positionieren. Unter "Positionssensor" ist hier jede Einrichtung zu verstehen, welche diese Bewegung abtastet und ein Signal zur Verfügung stellt, wonach der Verlauf der Bewegung in eindeutiger Weise im Rahmen der gewünschten Genauigkeit rekonstruiert werden kann. Der Begriff "Steuern" soll vorliegend insbesondere eine Steuerung mit Rückkopplung (Regelung) bezeichnen, wobei die Rückkopplung entweder dazu verwendet wird, den momentanen Zustand des Systems im Regelalgorithmus zu Teilen aus gemessenen Werten zu konstruieren, oder um die Modellparameter für eine bessere Modellvorhersage zu späteren Zeiten anzupassen oder zu beidem. Der Begriff "Steuereinheit" soll insbesondere digitale, explizit auf einem Modell basierende Regler umfassen, worunter jede Einrichtung zu verstehen ist, die auf der Basis eines mathematischen Modells für den (mit dem zu verstellenden Element verbundenen) Aktor in der Lage ist, Stellsignale für den Aktor so zu ermitteln, daß ein bestimmter Positionsverlauf möglichst exakt verfolgt werden kann, wobei dies auch das Halten einer bestimmten Position beinhalten kann. Als Eingangssignal erhält der Regler bzw. die Steuereinheit vorzugsweise mindestens die Pasitionsinformation, welche über den Positionssensor ermittelt und zur Verfügung gestellt wird. Als Modell im Sinne der Erfindung ist jede Menge an Berechnungsvorschriften zu verstehen, die es gestattet, den Positionsverlauf des Aktors mindestens aufgrund eines stückweise konstanten Verlaufs des Stellsignals in einem passenden Genauigkeitsbereich vorherzusagen - vorzugsweise jedoch das später eingeführte diskrete Zustandsraummodell. Dabei ist der Genauigkeitsbereich genau dann passend, wenn das von dem Regler ermittelte Stellsignal für den Aktor diesen veranlaßt, zu einem nächsten avisierten Zeitpunkt eine avisierte Position mit der mittleren Genauigkeit zu erreichen, wie es für die modellbasierende Steuerung der jeweiligen Anwendung erwünscht ist.

Die Modellparameter können gegebenenfalls nachgeführt werden, um eine Anpassung an die Realität zu gewährleisten, wobei die Anpassung aus dem Vergleich der Modellvorhersage und dem tatsächlich gemessenen Positionsverlauf erfolgt. Abgesehen von einer solchen Anpassung an zeitliche Veränderungen des Systems kann die Nachführung von Modellparametern auch dazu dienen, Nichtlinearitäten des Aktors zu erfassen. Dabei wählt man für die Beschreibung des Aktors ein im Vergleich zur nichtlinearen Beschreibung in der Regel einfacheres, lineares Modell und erfaßt die Nichtlinearität durch eine positions- bzw. zustandsabhängige Nachführung von Modellparametern. Auf diese Weise kann man, falls erforderlich, die Vorhersagegenauigkeit des Modells besser an die Realität anpassen.

Ferner enthält die Steuereinheit eine Vorfilterung des Soll-Positionsverlaufes, welche anhand des Modells einen vorgegebenen, physikalisch nicht oder nur schwer realisierbaren Positionsverlauf identifiziert, und einen neuen, modellgemäßen Positionsverlauf errechnet, der vom Aktor abgefahren werden kann und möglichst nahe am erwünschten Positionsverlauf liegt. Diese Vorfilterung ist bei der gewählten Reglerstrategie (s.u.) insbesondere dann notwendig, wenn das Positionssignal starke Sprünge enthält oder unrealistische Geschwindigkeitsänderungen verlangt. Durch eine solche Vorfilterung kann der Algorithmus, der dafür sorgt, daß ein gegebener Kurvenverlauf möglichst genau abgefahren wird, einfacher, d.h. weniger rechenintensiv, ausfallen, da dieser nicht, wie bei dem Stand der Technik, auf optimales Verhalten bei vorhandenen Randbedingungen ausgelegt werden muß.

Zusätzlich zu dem Positionssignal des Positionssensors kann die Steuereinheit als weitere Eingangsgröße auch den im Aktor fließenden Strom oder die aktuelle Motorwellengeschwindigkeit oder beides verwenden.

Zur Verbesserung der Genauigkeit, mit welcher ein fester Positionswert erreicht und gehalten wird, kann ein Fehlerintegrator gemäß dem Integralteil eines PID-Reglers verwendet werden, der entweder analog oder digital realisiert ist, wobei eine analoge Ausführung zum Zwecke des Senkens von digitalem Rauschen vorteilhaft sein kann.

Bei dem verwendeten Modell handelt es sich um ein zeitdiskretes Zustandsraummodell, welches eine Vorhersage für das Verhalten des Aktors aufgrund von Eingabeparametem liefert.

Bei dem Galvanometer-Aktor kann es sich beispielsweise um einen sogenannten Galvanometer-Scanner handeln, der entweder eine festsitzende Spule und einen drehbar gelagerten Magneten oder einen festsitzenden Magneten und eine drehbar gelagerte Spule besitzt. Der Galvanometer-Aktor kann jedoch auch ein Linearmotor sein, bei dem entweder eine Spule oder ein Magnet linear verschiebbar gelagert ist Bei dem Galvanometer-Aktor kann es sich um den aktiven Teil eines Kopfpositionierungssystems für Festplatten handeln, welches z.B. mit einer beweglichen Spule und einem festsitzenden Permanentmagneten arbeitet, wobei die Positionsinformation beispielsweise auf der Magnetschicht der Platten codiert ist.

Im folgenden wird ein Ausführungsbeispiel der Erfindung detailliert erläutert, wobei es sich bei dem zu verstellenden Element um einen drehbaren Spiegel eines optischen Systems handelt, welcher von einem Galvanometer-Aktor angetrieben wird, bei dem ein drehbar gelagerter Magnet durch das Magnetfeld einer stromdurchflossenen, festsitzenden Spule gedreht wird. Das Modell basiert auf einer Differentialgleichung, welche den elektrischen Widerstand R und die Induktivität L der Spule, die an der Spule angelegte Spannung U als Stellsignal für den Aktor, die Torsion T (Drehmoment/Stromfluß) und das Trägheitsmoment J des sich bewegenden Teils (d.h. Magnet und Spiegel) berücksichtigt, beispielsweise der Form

$$U = T \frac{d\vartheta}{dt} + L \frac{dI}{dt} + IR$$

$$IT = J \frac{d^2\vartheta}{dt^2} \tag{1}$$

U:  Spannung am Elektromagneten
T:  Torsionskonstante
L:  Induktivität des Elektromagneten
R:  Widerstand, welcher dem Strom entgegengesetzt wird
J:  Trägheitsmoment des sich bewegenden Systems (Permanentmagnet, Welle, Spiegel)
$\vartheta$:  Zeitabhängige Funktion des Winkels, den der Spiegel überstreicht
I:  Zeitabhängige Funktion des Stromflusses durch den Elektromagneten

Man kann eine solche Differentialgleichung als Zustandsraummodell der Form

$$\dot{\vec{Z}}(t) = A\vec{Z}(t) + \vec{b}\,U(t) \quad und \quad X(t) = \vec{c}^{\,T}\vec{Z}(t) \tag{2}$$

schreiben, wobei A eine Matrix ist, b und c geeignete Vektoren sind, U(t) die Eingangsgröße, X(t) die Ausgangsgröße und Z(t) der Zustandsraumvektor ist. Die Parameter R,L,T,J treten im allgemeinen in der Matrix und in den Vektoren c und b auf. Die Komponenten des Zustandsraumvektors müssen keine anschauliche physikalische Bedeutung haben, es ist jedoch möglich, die Matrix so zu wählen, daß sich als Zustandsraumvektor Z(t)=(X(t),V(t),I(t)) ergibt, wobei X(t) den Ort, V(t) die Geschwindigkeit und I(t) den Strom in Abhängigkeit von der Zeit wiedergeben. Die Lösung einer solchen Differentialgleichung für X(t) und einer kontinuierlichen Spannung U(t) liefert eine Funktion $X(R,L,T,J,X_0,V_0, I_0,U(t),t)$, die neben den physikalischen Parametern R,L,T,J des Scanners die Anfangsbedingungen $X_0,V_0,I_0$ und die Eingangsgröße U(t) enthält. Für zeitdiskrete Systeme, wie sie bei einem digitalen Ansatz auftreten, erhält man aus obigem Zustandsraummodell,

$$\vec{Z}(k+1) = A_d\vec{Z}(k) + \vec{b}_d U(k) \quad und \quad X(k) = \vec{c}_d^{\,T}\vec{Z}(k) \tag{3}$$

als Lösung, wobei der Zustandsraumvektor Z(k) jetzt, bei geeigneter Wahl von $A_d$, genau die Größen $X_k$, $V_k$ und $I_k$ enthält, die den Ort, die Geschwindigkeit und den Strom zum Zeitpunkt $t_k$, dem Abtastzeitpunkt im k-ten Intervall, bezeichnen. Dabei beschreibt die Gleichung den Übergang vom Zustand Z(k) in den Zustand Z(k+1) aufgrund der im k-ten Intervall konstanten Eingangsgröße U(k) und seiner Eigendynamik $A_dZ(k)$. Kennt man einen Zustand Z(i) und die Eingangsgrößen U(i),U(i+1),...,U(k-2),U(k-1), läßt sich die gesamte Dynamik des Systems ausgehend von Z(i) bis zum Abtastintervall k vorhersagen. Eine Lösung für X(k) ergibt sich wie in Vorschrift (3) zu sehen ist, gemäß der Bildung des Skalarproduktes von Z(k) mit dem Vektor C. Eine solche Lösung für X(k) wobei man den Vektor Z(k) rekursiv aus einem bekannten Zustand Z(j) unter der Verwendung der U(i) mit $j \le i \le k-1$ erhält, wird im Folgenden mit $X(R,L,T,J,Z(j),k)$ bezeichnet; seine Abhängigkeit von der Folge $\{U_k\}$ aller bis zum Sample k an das System angelegten Eingangswerte $U_j$ ausgehend von $U_i$ wird unterdrückt. Z(0) ist dabei der Zustand des Systems zu Beginn und muß entsprechend der Startbedingungen des Systems initialisiert werden.

Bisher wurden noch keine gemessenen Daten, wie die aktuelle gemessene Position oder der aktuell gemessene Strom, verwendet. Bei einer geeigneten Wahl von $A_d$ beinhaltet der Zustandsvektor Z jedoch diese Größen. Somit ist es möglich, nach jedem Iterationsschritt k gemäß (3) in dem dabei errechneten Zustandsvektor Z(k+1) die errechneten Größen zum Teil durch gemessene zu ersetzen. Dieser Weg wird bei der vorliegenden Erfindung bestritten, wobei auf diese Weise aus einer reinen Steuerung eine Regelung gemacht wird. Gemäß der einzigen Zeichnung wird diese Aufgabe der Iteration und des anschließenden Austausches errechneter durch gemessene Werte von der Baugruppe 8 ausgeführt.

Gemessene Daten können vor einer solchen Verwendung gefiltert werden, um beispielsweise den Signal-Rauschabstand zu erhöhen. Das Modell kann dann selbstverständlich um solche Filter erweitert werden.

Im allgemeinen Fall sei nun eine Funktion Y(t) für den Winkelverlauf nach der Zeit vorgegeben, welche möglichst genau von dem Aktor bzw. dem Spiegel abgefahren werden soll. Dies kann im allgemeinen dadurch erreicht werden, daß ein U(t) in geeigneter Weise so gewählt wird, daß gilt: $Y(t) = X(R,L,T,J,X_0,V_0,I_0,U(t),t)$.

Üblicherweise wird beim Stand der Technik U(t) über einen PID-Regler erzeugt, der dazu im allgemeinen den Fehler Y(t) - X(t), das Fehlerintegral und die Winkelgeschwindigkeit bzw. die erste Ableitung des Fehlers als Eingangsgrößen verrechnet. Bei vergleichsweise langsamen Bewegungen, oder reduzierten Anforderungen an die dynamische Genauigkeit, gibt es optimierende Regler, die auf der Basis eines Modells in Form einer Impulsantwort basieren. Wobei sich dabei die Wahl des Modells nachteilig auf die Darstellung des Reglergesetzes, die Anpassbarkeit des Modells an sich ändernde Rahmenbedingungen (Adaption) und das Einbeziehen von Nichtlinearitäten auswirkt, falls die Impulsantwort nicht aufgrund geringer Beiträge zu langen Zeiten auf einige wenige Samples eingeschränkt werden kann (US 5 519 605).

Ziel der vorliegenden Erfindung ist es, einen Regler zu konstruieren, der auch bei hohen dynamischen Anforderungen eine gute Sollwertfolge erzielen kann.

Dazu wird ein Regler verwendet, der explizit das Modell des Aktors enthält und dieses verwendet, um die Steuerspannung ausgehend vom momentanen Zustand des Aktors und dem zukünftigen Sollwertverlauf ohne Einbeziehung von gegebenen Einschränkungen zu optimieren.

Die Antwortzeiten eines solchen Aktors liegen typischerweise im Millisekundenbereich. Um auch bei starken Signaländerungen eine geringe Abweichung vom Sollwertverlauf zu gewährleisten, muß der Regler möglichst oft die aktuelle Position erfassen und davon ausgehend die Steuerspannungen korrigieren - beispielweise alle 20µs. Bei schnelleren Aktoren sind höhere Abtastraten denkbar.

Um derart hohe Abtastraten verwenden zu können, müssen mehrere Modifikationen herkömmlicher optimierender Regler, wie sie in der chemischen Industrie zur Prozesssteuerung und Überwachung vorwiegend eingesetzt werden, vorgenommen werden.

Üblicherweise wird beim Stand der Technik das Modell in Form einer Stepresponse bzw. Impulsresponse zur Verfügung gestellt

Die Stepresponse ist bei Galvanometeraktoren nicht zu verwenden, da der Aktor dabei seinen Spezifikationsbereich verlassen würde.

Die Impulsresponse liefert bei Galvanometeraktoren im allgemeinen auch zu späten Zeitpunkten noch signifikante Beiträge, welche zur genauen Modellbeschreibung nicht unterdrückt werden können. Daher führt das übliche Verfahren des Verkürzens der Impulsantwort auf den Teil, in dem sich diese signifikant ändert, bei erhöhten Anforderungen an die Genauigkeit dennoch zu einem recht hohen Datenvolumen von 200 bis 300 Werten. Da diese Daten bei jedem Berechnungsschritt verwendet werden, sinkt die mögliche Abtastrate und damit die erzielbare Regelgenauigkeit bei hohen dynamischen Anforderungen. Des weiteren müssen alle diese Werte korrigiert werden, falls man eine Adaption des Reglergesetzes an sich langsam ändernde Parameter (R,T,..) vorsehen bzw. Nichtlinearitäten in die Modellbeschreibung integrieren möchte.

Das hier vorgestellte System unterscheidet sich von den üblichen Verfahren in der Verwendung des diskreten Zustandsraummodells (3), welches das gesamte Systemverhalten des Aktors in beispielsweise 6 bis maximal 15 Zahlen zu speichern vermag.

Für eine Realisierung des Sollwertverlaufs mit optimaler Genauigkeit wäre es im Prinzip erstrebenswert, die oben genannte Funktion $X(R,L,T,J,X_0,V_0,I_0,U(t),t)$ tatsächlich zu ermitteln, und zu einem vorgegebenen Y(t) ein U(t) zu errechnen. Für eine digitale Steuerung kann diesbezüglich für physikalisch abfahrbare Kurven Y (es treten keine Spannungen U(k) auf, die nicht zur Verfügung stehen) nur gefordert werden, daß der Abstand zwischen Soll- und Istwerten pro Sample k klein sein soll:

$$|Y(t_k) - X(R,L,T,J,_0,V_0,I_0, U(t_k),t_k)| \leq \varepsilon \qquad (4)$$

Obige Forderung (4) muß sich nicht auf einzelne real zur Verfügung stehende Samples beziehen, sondern ist auch im Hinblick auf ein mögliches Oversampling lesbar.

Für die Erfüllung der Forderung (4) gibt es eine Vielzahl von Möglichkeiten. Üblicherweise fordert man, daß ein Gütefunktional der Form

$$J = \sum_{i=n+1}^{n+m+1} \alpha_i (Y(i) - X(R,L,T,J,Z(n),i))^2 + \beta_i U(i)^2 \qquad (5)$$

minimal werden soll, wobei $\alpha_i$, $\beta_i$ zwei Gewichtsfolgen sind. Es handelt sich dabei um eine Optimierungsaufgabe, für die es neben dem least-square-Algorithmus ebenfalls eine Reihe von Verfahren gibt

Nachteilig bei diesen allgemeinen Verfahren zur Ermittlung der Ausgangsspannung U(n) durch Optimierung ist der hohe Rechenaufwand und die dadurch bedingte schlechte Eignung für einen Einsatz bei hohen dynamischen Anforderungen. So wird z.B. üblicherweise die Ausgangsspannung bei Reglern gemäß dem Stand der Technik durch das Lösen einer Diophantine-Gleichung oder Verfahren linearer Optimierung bestimmt Um Größenordnungen verschärft wird dieser Sachverhalt, wenn bei der Optimierung das Einhalten bestimmter Rahmenbedingungen gewährleistet werden muß. Was bei Prozessen im Minuten- oder Sekundenbereich sinnvoll erscheint, ist bei Abtastraten im 10µs Bereich unmöglich.

Um der erhöhten Abtastrate zu entsprechen, wird bei der vorliegenden Erfindung nur über einen kurzen Abschnitt des zukünftigen Positionsverlaufs optimiert, der klein gegenüber der Stepresponse ist und nicht größer als 10 Samples (Abtast- bzw. Steuerzeitpunkte) sein soll, beispielsweise 3 oder 5 Samples. Eine explizite Einbeziehung der Spannungswerte in die Optimierung unterbleibt, d.h. alle $\beta_i$ werden null gesetzt. Darüber hinaus wird bei der Optimierung nicht auf das Einhalten von Rahmenbedingungen geachtet.

Um noch mehr Rechenzeit zu sparen, wird bei der vorliegenden Erfindung bei der Optimierung nur eine einzige Spannung bestimmt, und diese beim Optimierungsprozess über die gewählten Samples (zukünftige Abtast- bzw. Steuerzeitpunkte) als konstant angenommen. Die Optimierung wird also so ausgeführt, als ob während des gesamten gewählten Positionsverlaufabschnitts eine konstante Spannung angelegt würde. Idealerweise wird die so ermittelte Spannung dann jedoch nur für das nächstfolgende Sample angelegt und der Algorithmus wird zum nächsten Abtastzeitpunkt wiederholt. Ergebnis dieses Vorgehens ist ein diskretes Reglergesetz in Form der Summe zweier Skalarprodukte:

$$U = <Reg1|Spos_n> + <Reg2|Z_n>$$

Reg1 und Reg2 sind zwei Vektoren, die aus den Parametern die dem Galvanometer Aktor zugrunde liegen (R,L,T,...) bzw. den Eigenwerten des Systems nach einer festen Formel bestimmt werden. Die Formel erhält man zwanglos aus der Optimierungsvorschrift. $Spos_n$ ist der maximal 10-dimensionale Vektor gebildet aus den zukünftigen Sollwerten $y_{n+i}$ ausgehend vom aktuellen Sollwert $y_{n+1}$ und $Z_n$ der aktuelle Zustand des Systems. Das erste Skalarprodukt wird demnach zwischen zwei höchstens 10-dimensionalen Vektoren gebildet, die Vektoren des zweiten Systems besitzen die Dimension der Ordnung des Systems. Bei einem Modell ohne Oszillator sind die Vektoren 3-dimensional. Berücksichtigt man noch den Oszillator, der gebildet wird aus Magnet, Motorwelle und Spiegel, so wird das Modell 5-dimensional.

Nachfolgend wird beispielhaft der Fall dargestellt, wenn die Optimierung nur über zwei Samples, d.h. die beiden nächstfolgenden Samples, erfolgt. Dabei wird gefordert, daß die Summe

$$\sum_{i=n+1}^{n+2}(Y(i) - X(R, L, T, J, Z(n), i))^2 =$$

$$(Y(n+1) - c^T A_d \vec{Z}(n) + c^T \vec{b} U(n))^2 + (Y(n+2) - c^T A_d^2 \vec{Z}(n) + c^T A_d \vec{b} U(n) + c^T \vec{b} U(n))^2$$

minimal wird, wobei Z(n) gemäß des Schaubildes von Einheit 8 zur Verfügung gestellt wird. Ein explizites Reglergesetz erhält man durch Nullsetzen des nach U(n) differenzierten obigen Ausdrucks. Man errechnet also eine Spannung, welche die Bewegung des Scanners möglichst in die Nähe der beiden zeitlich folgenden zu erreichenden Punkte führt. Die errechnete Spannung wird dann vorzugsweise nur für ein Sample wirklich angelegt und die Berechnung für i=n+2 wiederholt usw., oder tatsächlich für die berechnete Zeit angelegt und die Berechnung für i=n+3 wiederholt. Wie oben geschildert, läßt sich dieses Verfahren auch für mehr als zwei, vorzugsweise jedoch weniger als 10 Punkte anwenden.

Dieses effiziente Reglergesetz hat jedoch auch einen Nachteil. Es bestimmt kompromisslos diejenige Spannung, die das System in der Nähe der zu erreichenden Sollwertfolge hält. Wählt man den Optimierungshorizont klein (≤5), ist z.B. bei maximaler Beschleunigung noch eine dynamische Genauigkeit von bis zu 14 Bit möglich. Das Reglergesetz versagt jedoch, wenn die zum Erreichen des Sollpositionsverlaufs ermittelten Spannungen nicht verfügbar sind.

Daher muß der als Sollverlauf vorgegebene Kurvenzug in Echtzeit auf dessen Realisierbarkeit überprüft werden und gegebenenfalls durch einen sich an diesen möglichst gut anschmiegenden Kurvenverlauf ersetzt werden, der keine Limitierungen verletzt.

Dies gewährleistet ein Vorfilter, dessen Konzept beispielhaft in der einzigen Figur erläutert ist. Dabei sollen eingehende Positionsverläufe auf deren Machbarkeit hin überprüft und entsprechend korrigiert werden. Der korrigierte Kurvenverlauf soll sich möglichst eng an den erwünschten Verlauf anschmiegen, jedoch vorgegebene Rahmenbedingungen nicht verletzen.

Dazu wird das Stellsignal in einem m+1 stufigen Schieberegister (oder einem zyklischem Puffer) 1 verzögert, wobei die in dem Puffer enthaltenen Sollwerte analysiert werden. Der tatsächliche Regelkreis, bestehend aus dem Regler 6, dem Galvanometer-Aktor 7 und dem Modell 8, des Systems erhält den Sollpositionsverlauf damit um m Schritte verzögert.

Die Analyse kann zum einen erfolgen, indem der komplette Regelkreis einschließlich Galvanometer-Aktor 7 simuliert und auf Unzulässigkeiten durch einen Eingabe-Überwacher 5 überwacht wird. Dazu erhält ein Simulator, bestehend aus einem simulierten Regler 3, dem Modell 4 und dem Eingabe-Überwacher 5, die Sollwertfolge über einen Abgriff des Schieberegisters 1 und liefert seinerseits mit den Sollwerten korrelierte Zustände an das Schieberegister zurück. Bei der Verletzung von Vorgaben wird entsprechend der Art der Verletzung ein lokaler Optimierer 2 mit einer bestimmten Optimierungsstrategie gestartet. Dieser erzeugt im Schieberegister 1 einen neuen Positionsverlauf, der keine Einschränkungen verletzt. Dabei versucht er an den vorgegebenen Positionsverlauf zu beiden Seiten des im Schieberegister befindlichen Abschnitts anzuknüpfen und diesen soweit als möglich beizubehalten, bis gerade noch keine Einschränkungen verletzt werden. Dieser Test läuft iterativ und liefert als Ergebnis den zu ersetzenden Positionskurvenverlauf. Zentrales Element des lokalen Optimierers ist eine aus dem diskreten Zustandsraummodell entwickelte Matritzengleichung, über die ausgehend von einem Ausgangszustand und einer Folge von n zu erreichenden Endwerten n Eingangswerte U errechnet werden, die über n variierbare Zeitintervalle angelegt werden müssen, damit die n Endwerte erreicht werden. Dabei sollte n von der Größe der Systemordnung sein. Vorzugsweise wird dabei das vereinfachte Galvanometermodell aus Gleichung (1) verwendet, woraus sich n zu 3 ergibt Ein besonderer Vorteil, die Optimierung über Spannungswerte zu ermitteln liegt in der Tatsache, daß einige wenige Spannungen einen Kurvenverlauf über einen verhältnismäßig langen Zeitraum von 2-3ms beschreiben können. Meldet der Eingabeüberwacher ein Problem, so wird der simulierte Regelprozeß gestoppt, wodurch Rechenzeit verfügbar wird. Diese Rechenzeit erhält der lokale Optimierer, der versucht, zunächst ausgehend von einem zeitlich weit vor dem Problem liegenden, aber sich dennoch im Schieberegister befindlichen Zustand über lange Zeitintervalle an Sollpositionen am Anfang des Schieberegisters anzuknüpfen. Bleiben die dabei ermittelten Spannungen betragsmäßig unter $U_{max}$, werden die Zeitintervalle verkürzt. Dabei tastet man sich immer feiner werdend an das optimale Zeitintervall heran. Hilfreich ist hierbei das Verfahren der sukzessiven Approximation, wie es bei A/D-Wandlern verwendet wird, da man sich auf diese Weise mit acht Überprüfungen auf 1/256 genau an das optimale Zeitfenster herantasten kann. Sind die Spannungen nach einigen wenigen Iterationen, vorzugsweise acht, bestimmt, wird aus diesen in dem lokalen Optimierer 2 mittels des diskreten Zustandsraummodells das Kurvenstück errechnet, welches die Problemstelle überbrückt und an beide Seiten des sich im Schieberegister befindlichen Kurvenzuges anschließt. Dabei dient der Zustand, den der lokale Optimierer in seinem letzten Optimierungsschritt verwendete, als Anfangszustand für das Modell. Diese Kurvenerzeugung ist nicht mit zusätzlichem Rechenaufwand verbunden, da der Optimierer seine Arbeit beendet hat. Ist der Kurvenzug erzeugt, von dem man sicher sein kann, daß er keine Einschränkungen verletzt, da er unter dieser Anforderung konstruiert wurde, wird der Simulator des Regelkreises wieder initialisiert und läuft anstelle der Kurvenrekonstruktion, wodurch der Anfangszustand des Vorfilters wieder hergestellt wurde.

Die Haupt-Systembeschränkung ist die maximal anzulegende Spannung. Darauf kann bei der Optimierungsroutine gut getestet werden. Es muß nur überprüft werden ob die Spannungsbeträge aus dem aktuellen Iterationsschritt kleiner sind als $U_{max}$. Wenn ja, folgt der nächste Optimierungsschritt, wenn nein, werden die Spannungen aus dem letzten Optimierungsschritt gewählt oder das Optimierungsintervall wie oben beschrieben verfeinert.

Die maximale Spannung ist bei Galvanometern ein globaler Optimierungsparameter. Senkt man sie, senkt man den maximal fließenden Strom und die abgegebene Leistung. Senkt man also $U_{max}$, kann man dafür sorgen, daß ein Galvanometer, der droht, sich zu überhitzen, unter Performanceeinbuße unbeschädigt bleibt, wobei dies in voller Verträglichkeit mit der Optimierungsroutine erfolgt. Dabei kann die mittlere abgegebene Leistung vom Überwacher ermittelt werden, da diesem die simulierten Zustände des Galvanometers zur Verfügung stehen. Er bestimmt auch, wann $U_{max}$ gesenkt werden muß, um das Galvanometer vor Überhitzung zu bewahren.

Gemäß einer Möglichkeit kann auf eine komplette Simulation des Regelkreises verzichtet werden, so daß die Einheiten 3, 4 und 5 entfallen können. Die Überprüfungsmöglichkeiten sind dann eingeschränkt, und der lokale Optimierer 2 müsste dann sowohl die Überprüfung als auch die Optimierung vornehmen. Dazu werden die Ergebnisse der oben beschriebenen Matritzengleichung, die Spannungen, in ein diskretes Zustandsraummodell geleitet, welches dann seinerseits den Zustand errechnet, den die Gleichung im nächsten Schritt benötigt. Bei diesem Vorgehen ist nicht zu erwarten, daß Rechenleistung gespart wird.

Ist ein bestimmter Kurvenverlauf einmal abgefahren, so kann man die von der Rückkopplung gelieferten, zu den Intervallen i gehörigen Ortswerte $X_i$, die Eingangswerte für den Aktor U(i) und gegebenenfalls I(i) als Listen im Speicher halten und über die Forderung

$$\sum_{i=n+1}^{n+m}(X_i - X(R,L,T,J,Z(n),i))^2$$

minimal die Parameter R,L,T und J und damit das Modell kontinuierlich anpassen, wobei man sich auch auf einige wenige Parameter beschränken kann. Der Zustand Z(n) ist bei dieser Optimierung entweder bekannt, oder wird als unbekannt vorausgesetzt und ebenfalls bei der Optimierung ermittelt. Somit könnte beispielsweise ein thermisch bedingtes Schwanken des Widerstandswertes angepaßt werden. Dieses adaptive Verfahren kann man etablieren, um die Vorhersagegenauigkeit des Modells zu erhöhten, ist aber nicht in allen Fällen notwendig.

Der Parameter T zeigt im allgemeinen eine Winkelabhängigkeit $T = T(X)$. Damit wird die Differentialgleichung im allgemeinen nichtlinear. Dieses Problem läßt sich durch Nachführen von T mildern. Damit erweitert sich das Modell zu

$$X = X(R,L,T_{i-1},J,Z(i-1),i) \text{ mit } T_{i-1} = T((X_i + X_{i-1})/2),$$

um nur eine Möglichkeit der Diskretisierung von $T(X)$ zu nennen. Im allgemeinen hat man damit ein Verfahren an der Hand, Nichtlinearitäten zu behandeln, indem man sie als schrittweise Veränderung mit einbezieht.

Das von der obigen Differentialgleichung beschriebene Modell berücksichtigt nicht die auftretende Reibung, die Winkelabhängigkeit der Torsion, die Eigenresonanz des Oszillators, der von dem Magnet, der Achse zur Spiegelhalterung und dem Spiegel gebildet wird, sowie Effekte, die sich aus der Tatsache ergeben, daß der sich bewegende Permanentmagnet seine Umgebung magnetisiert. Ebenso wird der Positionsdetektor als ideal, d.h. die wahre Positionsinformation liefernd, angenommen. Das Modell läßt sich jedoch bei höheren Genauigkeitsanforderungen erweitern.

Ein erweitertes Modell, welches die oszillatorische Bewegung aufgrund der endlichen Steifigkeit der Verbindungsstange zwischen Aktor und Spiegel berücksichtigt, läßt sich durch folgende Differentialgleichung beschreiben:

$$U = T \frac{d\vartheta}{dt} + L \frac{dI}{dt} + IR$$

$$IT - K(\vartheta - \varphi) = J \frac{d^2\vartheta}{dt^2}$$

$$K(\vartheta - \varphi) = J \frac{d^2\varphi}{dt^2}$$

K:    Steifheit der Verbindungsstange bezüglich Drehbewegung

Für einen Linearmotor, der vertikal arbeitet, läßt sich folgende Differentialgleichung angeben:

$$U = B \frac{dX}{dt} + L \frac{dI}{dt} + IR$$

$$IB + gm = m \frac{d^2X}{dt^2}$$

U:    Spannung am Elektromagneten
B:    Beschleunigungskonstante
L:    Induktivität des Elektromagneten
R:    Widerstand, welcher dem Strom entgegengesetzt wird
m:    Masse des sich bewegenden Systems (Permanentmagnet, Befestigungsstange, Spiegel)
X:    Zeitabhängige Funktion des Ortes, den der Spiegel überstreicht
I:    Zeitabhängige Funktion des Stromflusses durch den Elektromagneten

Betreibt man den Linearmotor horizontal, so fällt der Term gm in der zweiten Gleichung weg.

**Patentansprüche**

1. Verfahren zum Verstellen eines Elements, wobei ein mit dem Element verbundener Galvanometer-Aktor sowie eine Steuereinheit vorgesehen sind, die ein Stellsignal für den Aktor liefert, um das Element gemäß eines frei vorgebbaren zeitlichen Soll-Positionsverlaufs zu verstellen, wobei der vorgegebene Soll-Positionsverlauf mittels eines Vorfilters von der Steuereinheit überprüft und falls erforderlich hinsichtlich seiner Realisierbarkeit modifiziert wird, wobei die Steuereinheit das Stellsignal aus dem derart gefilterten Soll-Positionsverlauf unter Berücksichtigung eines Modells der Einheit aus dem Aktor und dem Element ermittelt, wobei das Modell ein zeitdiskretes Zustandsraummodell ist und so gewählt ist, daß es für einen frei vorgebbaren zeitlichen Verlauf des Stellsignals den entsprechenden zeitlichen Positionsverlauf des Elements mit vorgegebener Genauigkeit vorhersagen kann, wobei ein Positionssensor vorgesehen ist, der ein Positionssignal entsprechend der Position des Elements liefert und der Steuereinheit zuführt, die das Positionssignal bei der Ermittlung des Stellsignals berücksichtigt, wobei die Ermittlung des Stellsignals aus dem Modell nur zu vorgegebenen Steuer-Zeitpunkten des Soll-Positionsverlaufs erfolgt, wobei der Wert des Stellsignals zu einem Steuer-Zeitpunkt dadurch ermittelt wird, daß gefordert wird, daß die summierte, gewichtete Differenz zwischen der Soll-Position und der von dem Modell vorhergesagten Position für die nächstfolgenden Steuer-Zeitpunkte für diesen Wert des Stellsignals minimal wird, und wobei der so ermittelte Wert des Stellsignals mindestens bis zum nachfolgenden Steuer-Zeitpunkt angelegt wird.

2. Verfahren nach Anspruch 1, **dadurch gekennzeichnet, daß** maximal die nächsten zehn, vorzugsweise maximal die nächsten fünf, jedoch mindestens die nächsten beiden Steuerzeitpunkte bei der Minimierung herangezogen werden.

3. Verfahren nach Anspruch 2, **dadurch gekennzeichnet, daß** die Minimierung bezüglich der kleinsten Differenzquadrate erfolgt.

4. Verfahren nach einem der vorhergehenden Ansprüche, **dadurch gekennzeichnet, daß** in dem Vorfilter jeweils ein bestimmter begrenzter Ausschnitt des Soll-Positionsverlaufs analysiert wird.

5. Verfahren nach Anspruch 4, **dadurch gekennzeichnet, daß** der Vorfilter ein Schieberegister umfasst, in welchem der Ausschnitt des Soll-Positionsverlaufs anfangs eingespeichert wird, wobei der eingespeicherte Ausschnitt durch einen modifizierten, realisierbaren Soll-Positionsverlauf ersetzt wird, wenn der ursprüngliche Ausschnitt des Soll-Positionsverlaufs als nicht realisierbar erkannt wurde, und wobei die Steuereinheit den Inhalt des Schieberegisters als bei der Ermittlung des Stellsignals zugrundezulegenden Soll-Positionsverlauf mit einer der Länge des Schieberegisters entsprechenden Verzögerung erhält.

6. Verfahren nach Anspruch 5, **dadurch gekennzeichnet, daß** bei der Realisierbarkeitsprüfung des Ausschnitts des Soll-Positionsverlaufs der Stellsignalverlauf ermittelt wird, der erforderlich ist, um den Ausschnitt des Soll-Positionsverlaufs zu realisieren, und die so ermittelten Stellsignale hinsichtlich ihrer Realisierbarkeit überprüft werden.

7. Verfahren nach Anspruch 6, **dadurch gekennzeichnet, daß** der Vorfilter eine Simulation des Regelkreises einschließlich des Aktors umfasst, um den Stellsignalverlauf zu ermitteln.

8. Verfahren nach Anspruch 6 oder 7, **dadurch gekennzeichnet, daß** die ermittelten Stellsignale optimiert werden, um den Systembeschränkungen hinsichtlich Realisierbarkeit zu entsprechen, und aus den optimierten Stellsignalen der modifizierte Soll-Positionsverlauf ermittelt wird, wobei das Optimierungsverfahren iterativ wiederholt wird..

9. Verfahren nach Anspruch 6 oder 7, **dadurch gekennzeichnet, daß** der Ausschnitt des Soll-Positionsverlaufs hinsichtlich Realisierbarkeit optimiert wird, wenn er als nicht realisierbar erkannt wurde, wobei der optimierte Soll-Positionsverlauf hinsichtlich seiner Realisierbarkeit durch Ermittelung der zugehörigen Stellsignal überprüft wird.,

10. Vorrichtung zum Verstellen eines Elements, wobei ein mit dem Element verbundener Galvanometer-Aktor sowie eine Steuereinheit vorgesehen sind, die ein Stellsignal für den Aktor liefert, um das Element gemäß eines frei vorgebbaren zeitlichen Soll-Positionsverlaufs zu verstellen, wobei der vorgegebene Soll-Positionsverlauf mittels eines Vorfilters von der Steuereinheit überprüft und falls erforderlich hinsichtlich seiner Realisierbarkeit modifiziert wird, wobei die Steuereinheit so ausgebildet ist, daß sie das Stellsignal aus dem derart gefilterten Soll-Positionsverlauf unter Berücksichtigung eines Modells der Einheit aus dem Aktor und dem Element ermittelt, wobei das Modell ein zeitdiskretes Zustandsraummodell ist und so gewählt ist, daß es für einen frei vorgebbaren zeitlichen Verlauf des Stellsignals den entsprechenden zeitlichen Positionsverlauf des Elements mit vorgegebener Genauigkeit vorhersagen kann, wobei ein Positionssensor vorgesehen ist, der ein Positionssignal entsprechend der Position des Elements liefert und der Steuereinheit zuführt, die das Positionssignal bei der Ermittlung des Stellsignals berücksichtigt, wobei die Ermittlung des Stellsignals aus dem Modell nur zu vorgegebenen Steuer-Zeitpunkten des Soll-Positionsverlaufs erfolgt, wobei der Wert des Stellsignals zu einem Steuer-Zeitpunkt dadurch ermittelt wird, daß gefordert wird, daß die summierte, gewichtete Differenz zwischen der Soll-Position und der von dem Modell vorhergesagten Position für die nächstfolgenden Steuer-Zeitpunkte für diesen Wert des Stellsignals minimal wird, und wobei der so ermittelte Wert des Stellsignals mindestens bis zum nachfolgenden Steuer-Zeitpunkt angelegt wird.

**Claims**

1. Method for positioning an element, whereby a galvanometer actuator that is connected to the element and a control unit are provided, said control unit generating a control signal for the actuator for positioning the element according to a arbitrary time varying course of desired position values, whereby said course of desired position values is verified and if necessary is modified taking its feasibility into account by the control unit by means of a pre-filter, in which the control unit determines the control signal from the such pre-filtered course of desired position values taking into account a model of the unit comprising the actuator and the element, whereby said model is a discrete time state space model selected such that said model can predict the time varied course of position values of the element for an arbitrary course of control values with predetermined accuracy, whereby a position sensor is provided which generates a position signal according to the position of the element and supplies said signal to the control unit, which takes said position signal into account for calculation of the control signal, whereby said calculation of the control signal by means of the model is only carried out at predetermined control times related to the sample times of the course of desired position values, whereby the value of the control signal is calculated at a control time by the condition that the summed-up, weighted difference between the desired position and the position predicted by the model becomes minimal for the next control times for said value of the control signal, and whereby the thus determined value of the control signal is applied at least until the next control time.

2. Method according to Claim 1, in which at maximum the subsequent ten, preferably the maximum subsequent five, but at least the subsequent two control times are used for minimization.

3. Method according to Claim 2, in which the minimization is effected using the least squares method.

4. Method according to one of the previous Claims, in which a certain limited part of the course of desired position values is analysed by the means of the pre-filter.

5. Method according to Claim 4, in which the pre-filter contains a shift register in which the section of the course of desired position values is stored in the beginning, whereby the memorized part is replaced by a modified and feasible course of position values if the original part of the course of desired position values is found not to be feasible, and whereby the control unit receives the content of the shift register as the course of desired position values that has to be used for the calculation of the control signal, with a delay according to the length of the shift register.

6. Method according to Claim 5, in which during the feasibility check of the section of the course of desired position values the course of control values is calculated which is necessary to realize the section of the course of desired position values and the said calculated control values are checked for feasibility.

7. Method according to Claim 6, in which the pre-filter encompasses a simulation of the control loop including the actuator to determine the course of control signal values.

8. Method according to Claim 6 or 7, in which the calculated control values are optimised in the event of a violation of the system restrictions such that their feasibility is ensured also under these system restrictions, and the modified course of desired position values is calculated from the optimised control signals, whereby the method of optimisation is repeated iteratively.

9. Method according to Claim 6 or 7, in which the section of the course of desired position values is optimised according to its feasibility if it is found not to be feasible, whereby the optimised course of desired position values is checked according to its feasibility by the calculation of the associated control signals.

10. Device for positioning an element, whereby a galvanometer actuator that is connected to the element and a control unit are provided, said control unit generating a control signal for the actuator for positioning the element according to a arbitrary time varying course of desired position values, whereby said course of desired position values is verified and if necessary is modified taking its feasibility into account by the control unit by means of a pre-filter, whereby the control unit is built such that it determines the control signal from the such pre-filtered course of desired position values taking into account a model of the unit comprising the actuator and the element, whereby said model is a discrete time state space model selected such that said model can predict the time varied course of position values of the element for an arbitrary course of control values with predetermined accuracy, whereby a position sensor is provided which generates a position signal according to the position of the element and supplies said signal to the control unit, which takes said position signal into account for calculation of the control signal, whereby said calculation of the control signal by means of the model is only carried out at predetermined control times related to the sample times of the course of desired position values, whereby the value of the control signal is calculated at a control time by the condition that the summed-up, weighted difference between the desired position and the position predicted by the model becomes minimal for the next control times for said value of the control signal, and whereby the thus determined value of the control signal is applied at least until the next control time.

## Revendications

1. Procédé d'ajustage de la position d'un élément où un acteur de galvanomètre relié à l'élément est prévu, ainsi qu'une unité de contrôle, qui fournit un signal de commande à l'acteur pour ajuster la position de l'élément conformément à une évolution recherchée de la position dans le temps, qui peut être librement prédéterminée, sachant que l'évolution recherchée et prédéterminée de la position est contrôlée par l'unité de contrôle au moyen d'un filtre préliminaire et, si nécessaire, modifiée en fonction de sa faisabilité, et que l'unité de contrôle calcule le signal de commande à partir de l'évolution recherchée de la position dans le temps ainsi filtrée en tenant compte d'un modèle de l'unité composée de l'acteur et de l'élément, où le modèle est un modèle d'espace d'états à valeurs discrètes en temps, choisi de manière à pouvoir prédire avec une précision prédéfinie l'évolution de la position dans le temps de l'élément pour une évolution dans le temps du signal de commande qui peut être librement prédéterminée, prévoyant également un capteur de position qui fournit un signal de position correspondant à la position de l'élément, et qui le transmet à l'unité de contrôle qui tient compte du signal de position dans le calcul du signal de commande, sachant que le calcul du signal de commande à partir du modèle ne s'effectue qu'à des moments de contrôle prédéterminés de l'évolution recherchée de la position, alors que la valeur du signal de commande à un moment de contrôle donné est calculée en exigeant que la différence cumulée et pondérée entre la position recherchée et la position prédite par le modèle pour les moments de contrôle suivants devienne minimale pour cette valeur du signal de commande, et fixant la valeur du signal de commande ainsi calculée au moins jusqu'au moment de contrôle suivant.

2. Procédé conforme à la spécification 1, **caractérisé par le fait qu'**au maximum les dix prochains, de préférence au maximum les cinq prochains, au minimum cependant les deux prochains moments de contrôle sont pris en compte lors de la minimisation.

3. Procédé conforme à la spécification 2, **caractérisé par le fait que** la minimisation s'effectue par rapport aux plus petits carrés des différences.

4. Procédé conforme à une des spécifications précédentes, **caractérisé par le fait qu'**un segment limité et déterminé de l' évolution recherchée de la position est respectivement analysé dans le filtre préliminaire.

5. Procédé conforme à la spécification 4, **caractérisé par le fait que** le filtre préliminaire comprend un registre à décalage dans lequel le segment de l'évolution recherchée de la position est initialement mémorisé, le segment mémorisé étant remplacé par une évolution recherchée de la position modifiée réalisable si le segment initial de l'évolution recherchée de la position a été reconnu comme non réalisable, l'unité de contrôle recevant, avec un décalage correspondant à la longueur du registre à décalage, le contenu de celui-ci en tant qu'évolution recherchée de la position à prendre en compte lors du calcul du signal de commande.

**6.** Procédé conforme à la spécification 5, **caractérisé par le fait qu'**un calcul de l'évolution de la position du signal de commande qui est nécessaire pour réaliser le segment de l'évolution de position recherchée est effectué lors de la vérification de faisabilité du segment de l'évolution de position recherchée, et que les signaux de commande ainsi calculés sont contrôlés par rapport à leur faisabilité.

**7.** Procédé conforme à la spécification 6, **caractérisé par le fait que** le filtre préliminaire comprend une simulation du circuit de réglage incluant l'acteur pour calculer l'évolution de la position du signal de commande.

**8.** Procédé conforme à la spécification 6 ou 7, **caractérisé par le fait que** les signaux de commande calculés sont optimisés pour répondre aux restrictions de système en fonction de la faisabilité, et que l'évolution de position recherchée modifiée est calculée à partir des signaux de commande optimisés, le procédé d'optimisation étant répété de manière itérative.

**9.** Procédé conforme à la spécification 6 ou 7, **caractérisé par le fait que** le segment de l'évolution recherchée de la position est optimisé en fonction de la faisabilité s'il est reconnu comme non-réalisable, la faisabilité de l'évolution recherchée et optimisée de la position étant vérifiée par le calcul des signaux de commande correspondants.

**10.** Dispositif d'ajustage de la position d'un élément où un acteur de galvanomètre relié à l'élément est prévu, ainsi qu'une unité de contrôle, qui fournit un signal de commande à l'acteur pour ajuster la position de l'élément conformément à une évolution recherchée de la position dans le temps, qui peut être librement prédéterminée, sachant que l'évolution recherchée et prédéterminée de la position est contrôlée par l'unité de contrôle au moyen d'un filtre préliminaire et, si nécessaire, modifiée en fonction de sa faisabilité, et que l'unité de contrôle est conçue de telle manière qu'elle calcule le signal de commande à partir de l'évolution recherchée de la position dans le temps ainsi filtrée en tenant compte d'un modèle de l'unité composée de l'acteur et de l'élément, où le modèle est un modèle d'espace d'états à valeurs discrètes en temps, choisi de manière à pouvoir prédire avec une précision prédéfinie l'évolution de la position dans le temps de l'élément pour une évolution dans le temps du signal de commande qui peut être librement prédéterminée, prévoyant également un capteur de position qui fournit un signal de position correspondant à la position de l'élément, et qui le transmet à l'unité de contrôle qui tient compte du signal de position dans le calcul du signal de commande, sachant que le calcul du signal de commande à partir du modèle ne s'effectue qu'à des moments de contrôle prédéterminés de l'évolution recherchée de la position, alors que la valeur du signal de commande à un moment de contrôle donné est calculée en exigeant que la différence cumulée et pondérée entre la position recherchée et la position prédite par le modèle pour les moments de contrôle suivants devienne minimale pour cette valeur du signal de commande, et fixant la valeur du signal de commande ainsi calculée au moins jusqu'au moment de contrôle suivant.

simulierter Zustand $S_j$

Abgriff

$y_j$

Regler [3]    $U_{sim}$    Modell [4]

$y_n$    $\begin{array}{c} S_j..S_{n-m} \\ y_n, y_{n-1},...,y_{n-m} \end{array}$ [1]

Lokaler Optimierer [2]

$|U| < U_{max}$ [5]
$(|I| < I_{max})$
$(P < P_{max})$

Optimierungsstrategie

$y_{n-m}$    Regler [6]    $U_{out}$    Galvo [7]    Pos-Feedback

Modell [8]

Zustand $Z_{n-m-1}$